# EUROPÄISCHE PATENTSCHRIFT

(11) **EP 1 667 070 B1**
(45) Veröffentlichungstag und Bekanntmachung des Hinweises auf die Patenterteilung: **23.08.2017**
(21) Anmeldenummer: 05026283.1
(22) Anmeldetag: 02.12.2005
(51) Int. Cl.: G07B 15/02, G07F 17/42, G07B 1/00, G06Q 20/00

(54) **Verfahren und Vorrichtung zum Buchen von Fahrkarten und/oder Zuschlägen für die Benutzung kostenpflichtiger Transportmittel zur Personenbeförderung**
Method and system for automatically recording the use of fee-based vehicles and for deducting the fees
Méthode et système de détecter automatiquement l'utilisation des vehicules payants et de facturer le prix du voyage

(30) Priorität: 02.12.2004 EP 04028569; 02.12.2004 DE 102004058273; 16.12.2004 DE 102004061180
(43) Veröffentlichungstag der Anmeldung: 07.06.2006
(73) Patentinhaber: mcity GmbH, 41238 Mönchengladbach (DE)
(72) Erfinder: Stoffelsma, Bouke, 41239 Mönchengladbach (DE); Feiter, Manfred, 41238 Mönchengladbach (DE)
(74) Vertreter: Rausch.Wanischeck.Brinkmann.Intellectual Property

(56) Entgegenhaltungen:
- EP-A- 0 621 560
- EP-A- 1 304 670
- WO-A-02/056237
- WO-A-2004/025527
- DE-A1- 19 957 660
- US-A- 4 449 186
- US-A1- 2003 027 557
- US-A1- 2003 164 399
- REUSSER A: "EIN FAHRSCHEIN-SYSTEM FUR LOS ANGELES ONLINE TICKET SYSTEM FOR LOS ANGELES" SIGNAL + DRAHT, TELZLAFF VERLAG GMBH. DARMSTADT, DE, Bd. 85, Nr. 11, 1. November 1993 (1993-11-01), Seiten 401-404, XP000487594 ISSN: 0037-4997

## Beschreibung

Die vorliegende Erfindung bezieht sich auf Verfahren und eine Vorrichtung zum Buchen von Fahrkarten und/oder Zuschlägen für die Benutzung kostenpflichtiger Transportmittel zur Personenbeförderung.

Der Begriff "Fahrkarte" umfaßt nachfolgend als Oberbegriff Fahrberechtigungen aller Art, wie beispielsweise Kurzstrecken-, Einzelfahrt-, Tages-, Monats-, Jahresfahrscheine oder dergleichen, Ermäßigungsberechtigungen aller Art, wie beispielsweise Kinder-, Gruppen-, Behindertenermäßigungen oder dergleichen, etc.

Bislang werden Fahrkarten für die Benutzung kostenpflichtiger Transportmittel zur Personenbeförderung überwiegend in Form von auf Papier gedruckten Fahrkarten bereitgestellt. Diese Fahrkarten können beispielsweise an Schaltern oder an entsprechenden Fahrkartenautomaten erworben werden, wobei der Fahrpreis normalerweise abhängig von der Wegstrecke ist, die mit dem kostenpflichtigen Transportmittel zurückgelegt werden soll. Die Tarifsysteme vieler Verkehrsverbünde kennen zudem verschiedene Zuschlagsarten, die der Kunde entweder separat zum Fahrschein oder zusammen mit dem Fahrschein erwerben muß. In Stuttgart ist beispielsweise für mitgeführte Hunde ein gesonderter Fahrschein erforderlich, in Mönchengladbach sind Fahrräder kostenpflichtig, für Personengruppen muß häufig ein Fahrschein mit einem Zuschlag erworben werden, der der Anzahl zusätzlicher Personen entspricht, etc. Zum Buchen solcher Zuschläge sind bereits Fahrkartenautomaten bekannt, die eine Displayeinrichtung aufweisen, beispielsweise in Form von Druckknöpfen, auf denen symbolhaft einzelne Zuschlagsarten dargestellt sind, oder in Form von Touch-Screens, bei denen ebenfalls durch Berührung von symbolhaft dargestellten Zuschlagssymbolen die gewünschte Zuschlagsart ausgewählt und entsprechend gebucht werden kann.

Fahrkarten in Papierform haben sich jedoch in der Vergangenheit als relativ umständlich in der Handhabung und relativ einfach zu fälschen erwiesen. Aus diesem Grunde gab es verschiedene Ansätze, den Papierfahrschein durch ein sogenanntes elektronisches Ticket zu ersetzen.

Beispielsweise sind Fahrkartensysteme bekannt, die auf sogenannten Smartcards basieren. Diese können sowohl kontaktbehaftete Karten (klassische Chipkarten) als auch kontaktlose Karten (Transponder-Karten) als auch Mischformen (Dual-Interface-Karten) sein. Solche Smartcards enthalten für die Fahrausweiserhebung relevante Daten (Fahrausweisdaten und/oder Tarifdaten).

Beispielsweise betreibt der Rhein-Main-Verkehrsverbund in Hanau probeweise ein sogenanntes "Check-In/Check-Out"-System, bei dem der Fahrgast sich mit Hilfe einer Chipkarte beim Ein- und Aussteigen an einem Terminal im Fahrzeug identifiziert. Ein Hintergrundsystem errechnet, welche Strecken der Kunde tatsächlich gefahren ist und bucht die ermittelten Fahrpreise auf ein mit der Chipkarte verknüpftes Konto.

Aus der PCT-Anmeldung NL 01/00215 ist ferner ein Verfahren bekannt, bei dem der Fahrgast ein mobiles Gerät (z. B. ein Mobiltelefon oder einen Transponder) mit einer ihm zugeordneten Nummer benutzt, um automatisch identifiziert zu werden, wenn er sich in einem Fahrzeug des öffentlichen Nahverkehrs aufhält. Das Fahrzeug registriert, wo der Fahrgast das Fahrzeug betritt und wo er das Fahrzeug verläßt. In der Regel werden diese Daten an ein Hintergrundsystem übermittelt, das auf Basis dieser Daten den Fahrpreis für die zurückgelegte Strecke ermittelt. Solche Systeme werden oft als "Be-In/Be-Out"-Systeme bezeichnet.

Aus der DE 199 57 660 ist ein Verfahren zur Abrechnung des Fahrpreises für die Benutzung öffentlicher Verkehrsmittel bekannt, bei dem ein vom Benutzer mitgeführter scheckkartenähnlicher Speicher mit einem Guthaben belegt ist. Während der Nutzung öffentlicher Verkehrsmittel werden von dem Verkehrsmittel Zählimpulse ausgesandt und bei jedem empfangenen Zählimpuls wird von dem auf der Speichereinheit abgespeicherten Guthaben ein Betrag abgebucht. Das Dokument EP 1304670 A offenbart ein Verfahren zum Buchen von Fahrkarten für die Benutzung eines kostenpflichtigen Transportmittels. Aus der Schweiz ist ein Pilotprojekt "easyride" bekannt, bei dem der Kunde eine Transponder-Karte bei sich führt, die beim Benutzen eines Fahrzeugs eine Anmeldung im Fahrzeug vornimmt und dies regelmäßig wiederholt. Die Kommunikation zwischen dem Fahrzeug und der Transponder-Karte ist dabei bidirektional und nimmt in der Komplexität zu, je mehr Fahrgäste sich im Fahrzeug befinden. Dennoch war der Komfort für den Kunden bereits gut.

Ferner ist ein Projekt "intermobil" bekannt, bei dem eine Chipkarte, wie beispielsweise eine Chipkarte eines Kreditinstitutes, in eine "intelligente" Hülle mit einem Display eingeschoben wird, die kontaktlos mit einem in einem Transportmittel vorgesehenen Lesegerät kommunizieren kann. Beim Betreten und Verlassen eines Transportmittels wird die in die Hülle eingesteckte Chipkarte dann verbunden mit dem Drücken einer Taste am Lesegerät an dem Lesegerät vorbeigeführt, so daß beim Verlassen des Transportmittels die Kosten für den Fahrschein ermittelt und abgerechnet werden können. Auch hierbei handelt es sich also um ein Check-In/Check-Out-System, wobei der Ein- und Auscheckvorgang durch die Verwendung der intelligenten Hülle, die trotz Verwendung kontaktbehafteter Karten eine kontaktlose Kommunikation mit dem Lesegerät ermöglicht, beschleunigt werden können.

Es ist eine **Aufgabe** der vorliegenden Erfindung, eine Vorrichtung und ein Verfahren zum Buchen von Fahrscheinen und/oder Zuschlägen für die Benutzung kostenpflichtiger Transportmittel mit einem elektronischen Ticket bereitzustellen. Diese Aufgabe wird gemäß der vorliegenden Erfindung durch ein Verfahren nach Anspruch 1 und eine Displayeinrichtung nach Anspruch 4 **gelöst.** Die abhängigen Ansprüche beziehen sich auf individuelle Ausgestaltungen der vorliegenden Erfindung.

Bei dem erfindungsgemäßen Verfahren zur Abrechnung von Fahrscheinen und/oder Zuschlägen für die Benutzung eines kostenpflichtigen Transportmittels zur Personenbeförderung unter Verwendung einer Displayeinrichtung und zumindest eines Nutzerendgerätes wird das Nutzerendgerät an ein eine Fahrkarten- und/oder Zuschlagsart anzeigendes Displayfeld der Displayeinrichtung herangeführt, woraufhin eine die Buchung der Fahrkarten- und/oder Zuschlagsart auslösende Kommunikation zwischen dem Nutzerendgerät und dem entsprechenden Display stattfindet.

Gemäß einer ersten Variante des erfindungsgemäßen Verfahrens sendet dazu ein dem Displayfeld zugeordneter Sender entsprechende Fahrkarten- und/oder Zuschlagsinformationen aufweisende Signale aus, die von einem im Nutzerendgerät integrierten Empfänger empfangen werden, sobald dieser in die Sendereichweite des Senders gelangt. Die empfangenen Fahrkarten- und/oder Zuschlagsinformationen werden daraufhin in dem Nutzerendgerät zwecks Buchung der entsprechenden Fahrkarte und/oder des entsprechenden Zuschlags weiterverarbeitet.

Die Displayeinrichtung umfaßt dabei zumindest ein Displayfeld, bevorzugt jedoch mehrere Displayfelder, die jeweils eine Fahrkarten- und/oder Zuschlagsart anzeigen. Bei den Zuschlagsarten kann es sich beispielsweise um die Mitnahme eines Fahrrades, um eine Fahrt in der ersten Klasse, um die Mitnahme eines Haustiers, um eine Gruppenfahrt oder dergleichen handeln. Die Anzeige kann dabei digital durch symbolhafte Abbildung oder schriftliche Beschreibung der jeweiligen Fahrkarten- und/oder Zuschlagsart erfolgen. Alternativ können die Symbole für die Fahrkarten- und/oder Zuschlagsarten oder die Benennungen der Fahrkarten- und/oder Zuschlagsarten auch aufgedruckt, aufgeklebt oder in sonstiger Weise auf den Displayfeldern angeordnet oder an diesen ausgebildet sein. Die Displayeinrichtung umfaßt ferner mehrere Sender, die jeweils einem Displayfeld zugeordnet und derart eingerichtet sind, daß sie Signale aussenden, die der Fahrkarten- und/oder Zuschlagsart entsprechende Fahrkarten- und/oder Zuschlagsinformationen aufweisen, wobei diese Signale von Nutzerendgeräten zu Abrechnungszwecken empfangen werden können. Bei diesen Nutzerendgeräten kann es sich grundsätzlich um eine Vielzahl unterschiedlicher Endgeräte handeln, denen ein elektronisches Ticket zugeordnet werden kann und die Signale von den Sendern der Displayeinrichtung empfangen können, wie beispielsweise eine Transponder-Karte, ein Mobiltelefon, ein Handheld oder dergleichen. Ferner weist die Displayeinrichtung zumindest eine Steuerung auf, die bevorzugt programmierbar ist und zum Steuern der Displayeinrichtung dient.

Um mit einem Nutzerendgerät an der erfindungsgemäßen Displayeinrichtung eine Fahrkarte und/oder einen Zuschlag zu buchen, wird das Nutzerendgerät im einfachsten Fall an dasjenige Displayfeld gehalten, das die gewünschte Fahrkarten- und/oder Zuschlagsart anzeigt. Das Nutzerendgerät empfängt dann automatisch ein oder mehrere Signale von dem dem Displayfeld zugeordneten Sender, wobei die Signale der Fahrkarten- und/oder Zuschlagsart entsprechende Fahrkarten- und/oder Zuschlagsinformationen aufweisen. Anhand dieser Fahrkarten- und/oder Zuschlagsinformationen kann dann der Fahrpreis in Verbindung mit anderen tarifrelevanten Informationen ermittelt und abgerechnet werden.

An dieser Stelle sei darauf hingewiesen, daß die Ermittlung der anderen tarifrelevanten Informationen nicht Gegenstand der vorliegenden Erfindung ist. Für die Erfindung ist es demnach unerheblich, wie die anderen tarifrelevanten Informationen genau erfaßt werden, ob beispielsweise durch ein Be-In/Be-Out-System oder ein Check-In/Check-Out-System, weshalb darauf nachfolgend nicht genauer eingegangen werden soll.

Die Displayfelder der erfindungsgemäß verwendeten Displayeinrichtung sind bevorzugt modular und austauschbar an einem Rahmen gehalten, wobei dies beispielsweise form- und/oder kraftschlüssig erfolgen kann. Beispielsweise können die Displayfelder als einzelne Tafeln ausgebildet sein, die in den Rahmen einsteckbar sind.

Gemäß einer weiteren Ausbildung umfaßt die Displayeinrichtung zumindest ein Displayfeld, bei dem es sich um ein Löschfeld handelt. Das Löschfeld sendet Löschsignale aus, die das ganze oder teilweise Löschen derjenigen Fahrkarten- und/oder Zuschlagsinformationen auslösen, die zuvor von einem Sender an ein Nutzerendgerät übertragen wurden. Stellt der Nutzer fest, daß er eine Fehlbuchung getätigt hat, so kann er entsprechend sein Nutzerendgerät an das Löschfeld halten, um die ungewünschten Fahrkarten- und/oder Zuschlagsinformationen wieder von seinem Endgerät zu entfernen, so daß keine Ermittlung und Abrechnung des Fahrpreises basierend auf diesen Fahrkarten- und/oder Zuschlagsinformationen erfolgt. Die Löschung kann bevorzugt nur innerhalb einer vorbestimmten Zeitspanne nach Auswahl der Fahrkarte und/oder des Zuschlags erfolgen.

Bevorzugt handelt es sich bei den Sendern um sogenannte RFID-Sender (Radio Frequency Identification) mit geringer Sendereichweite, die bevorzugt nur wenige Zentimeter beträgt, um auf diese Weise sicherzustellen, daß ein Nutzerendgerät, das vor ein bestimmtes Displayfeld gehalten wird, nur von dem diesem Displayfeld zugeordneten Sender Signale empfängt, also keine unerwünschten Signale von anderen Sendern, die anderen Displayfeldern zugeordnet sind. Natürlich können auch andere Senderarten verwendet werden, wie beispielsweise Infrarot-Sender, Kontaktflächen oder dergleichen.

Bevorzugt sind die Sender derart eingerichtet, daß sie kontinuierlich Signale aussenden, während sie in Betrieb sind. Auch können die Sender in vorbestimmten Zeitintervallen Signale aussenden, also in vorbestimmter Art und Weise getaktet sein.

Bei einer alternativen Ausgestaltung umfaßt die Displayeinrichtung zumindest eine Betätigungseinrichtung, wobei die Sender derart eingerichtet sind, daß sie bei einer Betätigung der Betätigungseinrichtung für eine vorbestimmte Zeitdauer Signale kontinuierlich oder in vorbestimmten Zeitintervallen aussenden. Die Betätigungseinrichtung kann beispielsweise als Druckknopf vorgesehen sein. Alternativ kann die Displayeinrichtung als Betätigungseinrichtung auch einen Näherungs- und/oder Bewegungssensor aufweisen, wobei die Sender Signale aussenden, sobald der Näherungs- und/oder Bewegungssensor anschlägt, also die Näherung oder Bewegung einer Person detektiert.

Bei einer weiteren Ausgestaltung der erfindungsgemäßen Displayeinrichtung ist zumindest ein Sender derart ausgebildet, daß unterschiedliche Signale von diesem ausgesendet werden. Kann beispielsweise über ein Displayfeld eine Gruppenfahrt gebucht werden, so kann der zugeordnete Sender entsprechend ein Signal für zwei Personen, ein weiteres Signal für drei Personen etc. aussenden, um auf diese Weise die Personenzahl festlegen zu können. Die Auswahl der Personenanzahl kann dann unter Verwendung des Nutzerendgeräts erfolgen. Auch kann die Personenzahl bestimmt werden, indem festgehalten wird, wie oft das Nutzerendgerät nacheinander in und aus der Sendereichweite des entsprechenden Senders gebracht wurde.

Die Displayeinrichtung kann ferner zumindest einen Empfänger aufweisen, der derart eingerichtet ist, daß er Signale von Nutzerendgeräten empfangen kann. Umfaßt die Displayeinrichtung dann ferner eine Rückmeldungseinrichtung, die derart eingerichtet ist, daß sie ein Rückmeldesignal ausgibt, sobald der zumindest eine Empfänger von einem Endgerät ein Empfangsbestätigungssignal empfängt, so kann der Nutzer über das Rückmeldungssignal darüber informiert werden, daß eine Buchung getätigt wurde. Bei dem Rückmeldungssignal kann es sich um ein optisches, ein akustisches oder um ein sonstiges Signal handeln. Beispielsweise erscheint ein optisches Signal an demjenigen Displayfeld, dessen zugeordnete Zuschlagsart soeben gebucht wurde.

Auch kann eine Rückmeldungseinrichtung in dem Endgerät integriert sein, die ein Rückmeldungssignal ausgibt, sobald das Endgerät ein Signal von einem Sender der Displayeinrichtung empfangen hat. Umfaßt das Endgerät ein Display, so kann auf dem Display die gebuchte Fahrkarten- und/oder Zuschlagsart angezeigt werden. Ist dies nicht der Fall, so kann die Rückmeldungseinrichtung ein anderes optisches oder akustisches Rückmeldungssignal ausgeben, um den Nutzer über die getätigte Buchung zu informieren.

Werden von einem einzelnen Sender mehrere, voneinander verschiedene Signale ausgesendet, die unterschiedliche Fahrkarten- und/oder Zuschlagsvarianten einer Fahrkarten- und/oder Zuschlagsart repräsentieren, so ist bevorzugt eine der Fahrkarten- und/oder Zuschlagsvarianten vom Nutzer auswählbar, wenn diese Signale von einem Nutzerendgerät empfangen werden. Bei den Fahrkarten- und/oder Zuschlagsvarianten kann es sich beispielsweise um eine, zwei oder mehrere zusätzliche Personen, mitgeführte Fahrräder oder Haustiere etc. handeln.

Gemäß einer zweiten Variante des erfindungsgemäßen Verfahrens weist das Nutzerendgerät einen Sender auf, der eine das Nutzerendgerät oder den Nutzer eindeutig identifizierende Kennung aussendet, die von einem einem Displayfeld zugeordneten Empfänger empfangen wird, sobald der Empfänger in die Sendereichweite des Senders gelangt, und die zusammen mit dem Displayfeld zugeordneten Fahrkarten- und/oder Zuschlagsinformationen zwecks Buchung der entsprechenden Fahrkarte und/oder des entsprechenden Zuschlags weiterverarbeitet wird. Im Gegensatz zur ersten Variante sendet hier also das Nutzerendgerät eine Kennung an das Displayfeld, wobei diese Kennung zusammen mit den Fahrkarten- und/oder Zuschlagsinformationen beispielsweise in einer Verarbeitungseinheit zur Ermittlung und Abrechnung des Fahrpreises weiterverarbeitet wird.

Auch hier umfaßt die Displayeinrichtung bevorzugt mehrere Displayfelder, denen jeweils ein Empfänger zugeordnet ist, wobei die Displayfelder ebenfalls ein Löschfeld aufweisen können, wie es zuvor in Bezug auf die erste Variante bereits beschrieben ist.

Der in das Nutzerendgerät integrierte Sender ist vorzugsweise ein RFID-Sender mit geringer Sendereichweite, die vorteilhaft nur wenige Zentimeter beträgt. Natürlich können auch andere Senderarten verwendet werden, beispielsweise ein Infrarot-Sender, eine Kontaktfläche oder dergleichen.

Ebenso wie bei der ersten Variante sendet der Sender bevorzugt kontinuierlich oder in vorbestimmten Zeitintervallen Signale aus.

Gemäß einer bevorzugten Ausführungsform der zweiten Variante des erfindungsgemäßen Verfahrens umfaßt die Displayeinrichtung eine Aktivierungseinrichtung, die den Sender aktiviert, sobald sich dieser einem Displayfeld nähert, woraufhin der Sender Signale aussendet. Auf diese Weise kann verhindert werden, daß der Sender ständig sendet, wobei er unnötig Energie verbrauchen würde.

Schließlich umfaßt die Displayeinrichtung bevorzugt eine Rückmeldungseinrichtung, die derart eingerichtet ist, daß sie ein Rückmeldungssignal ausgibt, sobald zumindest einer der den Displayfeldern zugeordneten Empfänger ein Signal von einem Sender eines Nutzerendgerätes empfängt, um dem Nutzer auf diese Weise anzuzeigen, daß eine Kommunikation zwischen dem Nutzerendgerät und der Displayeinrichtung stattgefunden hat. Beispielsweise kann das Displayfeld, dessen zugeordneter Empfänger ein Signal von einem Nutzerendgerät empfangen hat, ein optisches Signal ausgeben, wie beispielsweise ein Blinklichtsignal oder dergleichen. Natürlich sind auch andere Rückmeldungssignale möglich.

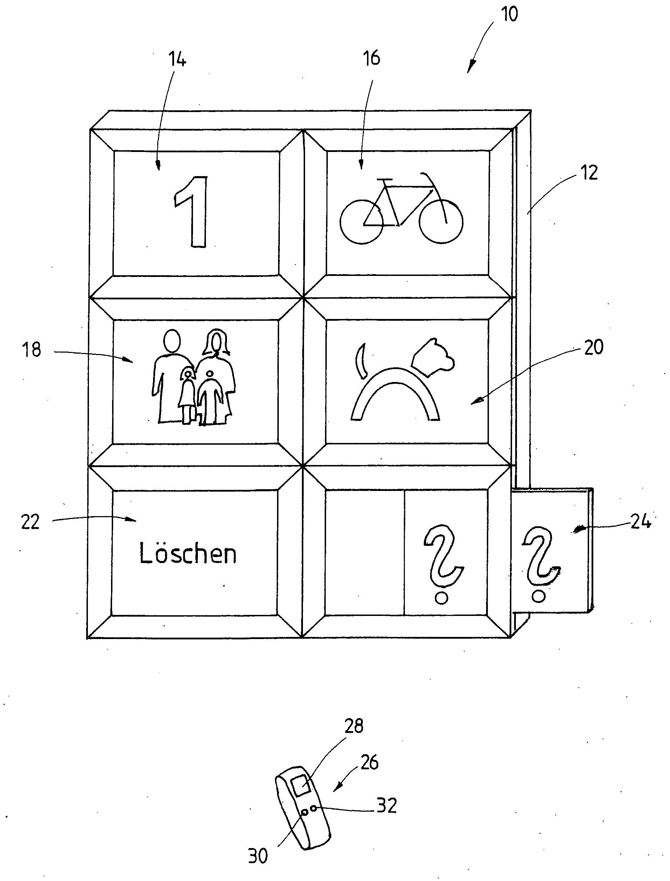

Nachfolgend werden Ausführungsbeispiele der erfindungsgemäßen Displayeinrichtung unter Bezugnahme auf die Zeichnung genauer beschrieben.

Die Zeichnung zeigt eine Displayeinrichtung zum Buchen von Zuschlägen für die Benutzung kostenpflichtiger Transportmittel zur Personenbeförderung. Die Displayeinrichtung umfaßt einen Rahmen 12, in dem Displayfelder 14, 16, 18, 20, 22 und 24 form- und/oder kraftschlüssig gehalten sind, die jeweils eine Zuschlagsart symbolhaft anzeigen. Das Displayfeld 14 zeigt die Ziffer 1 zum Buchen einer Fahrt erster Klasse, das Displayfeld 16 ein Fahrrad zur Mitnahme eines solchen, das Displayfeld 18 eine Personengruppe zum Buchen von Gruppenfahrten, das Displayfeld 20 einen Hund für die Mitnahme von Haustieren, das Displayfeld 22 die Aufschrift "Löschen" zum Löschen von auf einem Endgerät gespeicherten Zuschlagsinformationen und das Displayfeld 24 Fragezeichensymbole, die für weitere mögliche Zuschlagsarten stehen. Die einzelnen Displayfelder 14, 16, 18, 20 und 22 sind tafelartig ausgebildet und können in den Rahmen 12 eingesteckt werden, wie es anhand des Displayfelds 24 angedeutet ist. Die einzelnen Symbole können durch Drucken, Prägen, Kleben oder in sonstiger Art und Weise an den Displayfeldern 14 bis 24 angeordnet werden. Alternativ können die in der Zeichnung dargestellten Displayfelder auch als elektronische Anzeige ausgebildet sein, beispielsweise als LCD-Anzeige.

Hinter jedem Displayfeld 14 bis 24 ist gemäß einer ersten Variante jeweils ein RFID-Sender mit geringer Sendereichweite, die bevorzugt nur wenige Zentimeter beträgt, angeordnet, der Signale aussendet, die der Zuschlagsart entsprechende Zuschlagsinformationen aufweisen, wobei diese Signale von Nutzerendgeräten zu Abrechnungszwecken empfangen werden können. Während des Betriebs senden die Sender die genannten Signale kontinuierlich aus. Alternativ können die Signale auch getaktet in vorbestimmten Zeitintervallen von den Sendern übermittelt werden.

Ferner umfaßt die Displayeinrichtung 10 eine nicht dargestellte programmierbare Steuerung zum Steuern der Displayeinrichtung 10, die sicherstellt, daß jeder Sender Signale mit den zugeordneten Zuschlagsinformationen aussendet. Die Bezugsziffer 26 bezeichnet ein Nutzerendgerät, das derart eingerichtet ist, daß es von der Displayeinrichtung 10 ausgesendete Signale empfangen und weiterverarbeiten kann. Ein Senden von Signalen von dem Nutzerendgerät 26 an die Displayeinrichtung 10 ist hingegen nicht möglich. Bei dem Nutzerendgerät 26 handelt es sich also um ein unidirektional arbeitendes Endgerät. Das Nutzerendgerät 26 weist vorliegend ein Display 28 sowie zwei Druckknöpfe 30 und 32 auf.

Soll nun mit dem Nutzerendgerät 26 eine Zuschlagsart gebucht werden, will also beispielsweise der Nutzer ein Fahrrad im Transportmittel transportieren, so führt der Nutzer das Nutzerendgerät 26 nahe an das Displayfeld 16 heran, das symbolhaft ein Fahrrad darstellt. Sobald das Nutzerendgerät 26 in die Sendereichweite des dem Display 16 zugeordneten Senders kommt, empfängt es die von dem entsprechenden Sender ausgesendeten Signale mit den Zuschlagsinformationen betreffend das Mitführen eines Fahrrades. Sobald das Nutzerendgerät 26 diese Signale empfängt, gibt es über eine nicht dargestellte Rückmeldungseinrichtung ein Rückmeldungssignal aus, beispielsweise optisch oder akustisch. Ferner wird der Nutzer über das Display 28 aufgefordert, zu bestätigen, daß er eine Buchung basierend auf den empfangenen Zuschlagsinformationen wünscht. Die Bestätigung oder Ablehnung der Buchung kann über die Druckknöpfe 30 bzw. 32 erfolgen. Wird die Buchung abgelehnt, werden die empfangenen Informationen gelöscht. Wird die Buchung hingegen bestätigt, so werden die empfangenen Tarifinformationen in einer Speichereinheit des Nutzerendgerätes gespeichert und, beispielsweise zusammen mit Fahrtstreckeninformationen, die die vom Benutzer im kostenpflichtigen Transportmittel zurückgelegte Wegstrecke anzeigen, weiterverarbeitet. An dieser Stelle sei angemerkt, daß die Weiterverarbeitung der Informationen, insbesondere die Ermittlung und Abrechnung von Fahrpreisen, nicht Gegenstand der vorliegenden Erfindung ist, weshalb darauf nachfolgend nicht näher eingegangen wird.

Wurde eine Buchung fälschlicherweise vom Nutzer bestätigt, so daß die entsprechenden Zuschlagsinformationen auf der Speichereinheit des Nutzerendgerätes 26 abgelegt wurden, können diese mit Hilfe des Displayfeldes 22, dem sogenannten "Löschfeld", wieder gelöscht werden. Dazu führt der Nutzer sein Nutzerendgerät 26 nahe an das Displayfeld 22 heran, so daß das Nutzerendgerät 26 Signale von dem dem Displayfeld 22 zugeordneten Sender empfängt. Daraufhin wird der Nutzer über das Display 28 des Nutzerendgerätes 26 dazu aufgefordert, die Löschung der auf der Speichereinheit des Nutzerendgerätes 26 gespeicherten Informationen zu bestätigen. Erfolgt die Bestätigung, so werden die Daten gelöscht. Wird die Bestätigung abgelehnt, so bleiben die entsprechenden Informationen auf der Speichereinheit gespeichert.

Während der Buchung einer Gruppenfahrt über das Displayfeld 18 kann der zugeordnete Sender Signale im wesentlichen auf zwei verschiedene Arten senden. Zum einen kann er ein Signal aussenden, das die Zuschlagsinformationen für jeweils eine zusätzliche Person aufweist. Durch mehrfaches Empfangen und Bestätigen dieser Signale durch das Nutzerendgerät 26, indem dieses beispielsweise mehrfach in die und aus der Sendereichweite des Senders gebracht wird, kann dann nacheinander die gewünschte Personenzahl gebucht werden. Zum anderen kann der dem Displayfeld 18 zugeordnete Sender auch verschiedene Signale aussenden, die jeweils Zuschlagsinformationen für eine zusätzliche Person, zwei zusätzliche Personen etc. umfassen. Über das Nutzerendgerät 26, das diese Signale empfängt, kann dann die gewünschte Zuschlagsinformation ausgewählt werden, die die gewünschte Personenzahl anzeigt. Alternativ kann auch hier die Anzahl der Personen bestimmt werden, indem das Nutzerendgerät mehrfach in die und aus der Sendereichweite des entsprechenden Senders gebracht wird

Nachfolgend wird eine alternative Ausführungsform der ersten Variante der vorliegenden Erfindung unter Bezugnahme auf die Zeichnung beschrieben. Bei dieser Ausführungsform umfaßt die Displayeinrichtung 10 zusätzlich eine Empfangseinrichtung, mit der Signale von einem Nutzerendgerät empfangen werden können. Ferner handelt es sich bei dem Nutzerendgerät um ein bidirektional kommunizierendes Endgerät. Mit dem Nutzerendgerät können also sowohl Signale von den Sendern der Displayeinrichtung 10 empfangen als auch Signale an die Empfangseinrichtung der Displayeinrichtung 10 gesendet werden. Soll nun ein Zuschlag gebucht werden, so wird das Nutzerendgerät an das entsprechende Displayfeld herangeführt, so daß es die entsprechenden Signale von dem zugeordneten Sender empfängt. Werden Signale von dem Nutzerendgerät empfangen, so erfolgt von dem Nutzerendgerät automatisch eine Rückmeldung an die Empfangseinrichtung der Displayeinrichtung 10, die dieser anzeigt, welche Zuschlagsinformationen empfangen wurden. Eine in die Displayeinrichtung 10 integrierte Rückmeldungseinrichtung gibt daraufhin ein Rückmeldungssignal aus, das dem Nutzer anzeigt, welcher Zuschlag vom Nutzerendgerät empfangen wurde. Beispielsweise kann die Rückmeldung derart erfolgen, daß das entsprechende Symbol der gewählten Zuschlagsart aufblinkt, um den Nutzer über seine Zuschlagswahl zu informieren. Ist der Nutzer mit dieser einverstanden, so ist kein weiterer Schritt erforderlich. Ist dies hingegen nicht der Fall, so kann er die entsprechenden Zuschlagsinformationen am Displayfeld 22, also am Löschfeld, löschen. Diese Ausführungsform hat den Vorteil, daß das Nutzerendgerät keine Anzeigeeinrichtung wie das Display 28 und/oder Druckknöpfe 30 bzw. 32 benötigt, um die Buchung zu bestätigen.

Bei einer weiteren Ausführungsform der ersten Variante der vorliegenden Erfindung umfaßt die Displayeinrichtung 10 Betätigungseinrichtungen, die den jeweiligen Displayfeldern 14 bis 24 zugeordnet sind. Bei dieser Betätigungseinrichtung kann es sich beispielsweise um Druckknöpfe handeln. Auch kann das Displayfeld selber als Drucktaste ausgebildet werden. Bei dieser Ausführungsform senden die den Displayfeldern 14 bis 24 zugeordneten Sender nur dann Signale aus, wenn eine Betätigungseinrichtung betätigt wurde. Soll beispielsweise eine Fahrt erster Klasse gebucht werden, so wird die dem Displayfeld 14 zugeordnete Betätigungseinrichtung betätigt, woraufhin der dem Displayfeld 14 zugeordnete Sender kontinuierlich oder getaktet in vorbestimmten Zeitintervallen Signale für eine vorbestimmte Zeitdauer aussendet. Auf diese Weise können versehentliche Buchungen unerwünschter Zuschläge vermieden werden, da nur derjenige Sender sendet, dessen Zuschlagsinformationen durch Betätigen der Betätigungseinrichtung angefordert werden.

Nachfolgend wird ebenfalls unter Bezugnahme auf die Zeichnung eine weitere Variante gemäß der vorliegenden Erfindung näher beschrieben.

Bei dieser weiteren Variante umfaßt das Nutzerendgerät 26 einen RFID-Sender mit geringer Sendereichweite, die bevorzugt nur wenige Zentimeter beträgt. Hinter jedem Displayfeld 14 bis 24 der Displayeinrichtung 10 ist ein Empfänger angeordnet, der von dem Nutzerendgerät 26 ausgesendete Signale empfangen kann. Ferner umfaßt die Displayeinrichtung 10 eine nicht dargestellte Aktivierungseinrichtung sowie eine nicht dargestellte Rückmeldungseinrichtung.

Zum Buchen einer Zuschlagsart führt der Nutzer sein Nutzerendgerät 26 nahe an eines der Displayfelder 14 bis 24 heran, dessen Zuschlagsart er buchen möchte, beispielsweise an das Displayfeld 16, wenn er ein Fahrrad im Transportmittel transportieren will. Sobald das Nutzerendgerät 26 in Reichweite der Aktivierungseinrichtung kommt, wird der im Nutzerendgerät 26 integrierte Sender automatisch aktiviert, woraufhin er zumindest eine das Nutzerendgerät 26 oder den Nutzer eindeutig identifizierende Kennung aussendet. Wird das Nutzerendgerät 26 dann so nah an das Displayfeld 16 herangeführt, daß der hinter dem Displayfeld 16 angeordnete Empfänger in die Sendereichweite des Senders kommt, so empfängt der Empfänger die vom Sender ausgesendete Kennung. Daraufhin gibt die Rückmeldungseinrichtung der Displayeinrichtung 10 ein Rückmeldungssignal aus, das dem Nutzer anzeigt, daß ein Empfänger der Displayeinrichtung 10 eine vom Sender des Nutzerendgerätes 26 ausgesendete Kennung empfangen hat. Bevorzugt ist das Rückmeldungssignal dem entsprechenden Displayfeld 16 zugeordnet. So kann beispielsweise das Displayfeld 16 blinken, sobald der zugeordnete Empfänger Informationen empfangen hat.

Nach Empfangen der Kennung wird diese zusammen mit Zuschlagsinformationen beispielsweise an eine nicht dargestellte Weiterverarbeitungseinheit übermittelt, die basierend auf diesen Informationen die Ermittlung und Abrechnung des Fahrpreises vornimmt. Die Abrechnung kann hier beispielsweise anhand eines der Kennung und somit dem Nutzer zugeordneten Kundenkontos erfolgen, das beim Verfahrensanbieter eingerichtet ist. Natürlich sind hier auch andere Abrechnungsvarianten denkbar.

Gemäß der weiteren Variante des erfindungsgemäßen Verfahrens sendet also das Nutzerendgerät 26 Daten an die Displayeinrichtung 10, um eine Buchung eines Zuschlags durchzuführen, wobei die Buchung sowie die Abrechnung vorteilhaft durch ein Buchungs- und Abrechnungssystem des Verfahrensanbieters erfolgen.

Es sollte klar sein, daß die zuvor beschriebenen Ausführungsformen der vorliegenden Erfindung nicht einschränkend sind. Vielmehr sind Modifikationen und Änderungen möglich, ohne den Schutzbereich der vorliegenden Erfindung zu verlassen, der durch die beiliegenden Ansprüche definiert ist. Insbesondere können einzelne Merkmale einer Ausführungsform oder Variante durch einzelne Merkmale einer anderen Ausführungsform oder Variante ersetzt oder ergänzt werden, soweit es dem Fachmann sinnvoll erscheint.

### Bezuaszeichenliste

- 10: Displayeinrichtung
- 12: Rahmen
- 14: Displayfeld
- 16: Displayfeld
- 18: Displayfeld
- 20: Displayfeld
- 22: Displayfeld
- 24: Displayfeld
- 26: Nutzerendgerät
- 28: Display
- 30: Druckknopf
- 32: Druckknopf

## Patentansprüche

1. Verfahren zum Buchen von Fahrkarten und/oder Zuschlägen für die Benutzung eines kostenpflichtigen Transportmittels zur Personenbeförderung, wobei
- eine Displayeinrichtung mit mehreren jeweils eine Fahrkarten- und/oder Zuschlagsart anzeigenden Displayfeldern, denen jeweils ein Sender zugeordnet ist, mittels dieser Sender Signale aussendet, und
- ein einen Empfänger aufweisendes Nutzerendgerät an eines der Displayfelder und damit in den Empfangsbereich der Signale eines der Sender herangeführt wird und die Signale empfängt und zur Buchung weiterverarbeitet.

2. Verfahren nach Anspruch 1, **dadurch gekennzeichnet, dass** die Aussendung der Signale für eine vorbestimmte Zeitdauer durch die Betätigung einer Betätigungseinrichtung ausgelöst wird.

3. Verfahren nach einem der vorhergehenden Ansprüche, **dadurch gekennzeichnet, dass** wenigstens einer der Sender ein Löschsignal aussendet, welches das Löschen einzelner oder aller in dem Nutzerendgerät gespeicherten Fahrkarten- und/oder Zuschlagsinformationen auslöst.

4. Displayeinrichtung zum Buchen von Fahrkarten und/oder Zuschlägen für die Benutzung eines kostenpflichtigen Transportmittels zur Personenbeförderung unter Verwendung eines einen Empfänger aufweisenden Nutzerendgerätes nach dem Verfahren nach wenigstens einem der Ansprüche 1 bis 3, **gekennzeichnet durch** eine Vielzahl von Displayfeldern, wobei jedem der Displayfelder ein Sender zugeordnet ist.

5. Displayeinrichtung nach Anspruch 4, **dadurch gekennzeichnet, dass** ein Displayfeld ein Löschfeld ist, dessen Sender ein Signal aussendet, welches das Löschen einzelner oder aller in dem Nutzerendgerät gespeicherten Fahrkarten- und/oder Zuschlagsinfarmationen auslöst.

6. Displayeinrichtung nach einem der Ansprüche 4 oder 5, **dadurch gekennzeichnet, dass** diese zumindest eine Betätigungseinrichtung aufweist und die Sender derart eingerichtet sind, dass sie bei Betätigung der Betätigungseinrichtung Signale für eine vorbestimmte Zeitdauer aussenden.

7. Displayeinrichtung nach einem der Ansprüche 4 bis 6, **dadurch gekennzeichnet, dass** diese zumindest einen Empfänger zum Empfang von Signalen eines Nutzerendgerätes aufweist.

8. Displayeinrichtung nach einem der Ansprüche 4 bis 7, **dadurch gekennzeichnet, dass** der Sender ein RFID-Sender mit geringer Sendereichweite ist.

9. Displayeinrichtung nach einem der Ansprüche 4 bis 8, **dadurch gekennzeichnet, dass** die Displayfelder modular und austauschbar an einem Rahmen angeordnet sind.

10. Displayeinrichtung nach Anspruch 9, **dadurch gekennzeichnet, dass** Displayfelder form- und/oder kraftschlüssig am Rahmen gehalten sind.

## Claims

1. A method for booking tickets and/or surcharges for the use of a fee-based transport means for the passenger transport, wherein
- a display device with several display fields, which respectively indicate one type of ticket and/or surcharge, to which display fields respectively one sender is allocated, emits signals by means of these senders, and
- a user terminal which comprises a receiver, is brought closer to one of the display fields and thus into the reception range of the signals from one of the senders and receives the signals and further processes them for the booking.

2. A method according to claim 1, **characterized in that** the emission of the signals for a predetermined period of time will be triggered by actuating an actuation device.

3. A method according to one of the preceding claims, **characterized in that** at least one of the senders emits a clearing signal which triggers the deletion of individual or all ticket and/or surcharge information that is stored in the user terminal.

4. A display device for booking tickets and/or surcharges for the use of a fee-based transport means for the passenger transport using a user terminal which comprises a receiver, according to the method of at least one of the claims 1 through 3, **characterized by** a plurality of display fields, wherein a sender is allocated to each one of the display fields.

5. A display device according to claim 4, **characterized in that** one display field is a deletion field, the sender of which emits a signal which triggers the deletion of individual or all ticket and/or surcharge information that is stored in the user terminal.

6. A display device according to one of the claims 4 or 5, **characterized in that** this one comprises at least one actuating device and that the senders are adapted such that they emit signals for a predetermined period of time, if the actuating device is actuated.

7. A display device according to one of the claims 4 through 6, **characterized in that** this one comprises at least one receiver for receiving signals of a user terminal.

8. A display device according to one of the claims 4 through 7, **characterized in that** the sender is a RFID-sender with a small transmission range.

9. A display device according to one of the claims 4 through 8, **characterized in that** the display fields are arranged on a frame in a modular and exchangeable manner.

10. A display device according to claim 9, **characterized in that** the display fields are held on the frame in an interlocking and/or force-fitting manner.

## Revendications

1. Procédé d'achat de billets de transport et/ou de suppléments pour l'utilisation d'un moyen de transport payant pour le transport de personnes, dans lequel
- un dispositif d'affichage comprenant plusieurs champs d'affichage, qui indiquent chacun un type de billet de transport et/ou de supplément, auxquels champs d'affichage est respectivement attribué un émetteur, émet des signaux par moyen de ces émetteurs, et
- un terminal d'utilisateur comprenant un récepteur est rapproché à l'un des champs d'affichage et ainsi dans la zone de réception des signaux de l'un des émetteurs, le terminal d'utilisateur recevant les signaux et traitant ceux-ci pour l'achat.

2. Procédé selon la revendication 1, **caractérisé en ce que** l'émission des signaux pendant une durée prédéterminée est déclenchée par l'actionnement d'un dispositif d'actionnement.

3. Procédé selon l'une des revendications précédentes, **caractérisé en ce qu'**au moins un des émetteurs émet un signal d'effacement, qui déclenche l'effacement d'une seule information ou de toutes les informations de billet de transport et/ou de supplément stockée(s) dans le terminal d'utilisateur.

4. Dispositif d'affichage pour acheter des billets de transport et/ou des suppléments pour l'utilisation d'un moyen de transport payant pour le transport de personnes en utilisant un terminal d'utilisateur comprenant un récepteur selon le procédé selon au moins une des revendications 1 à 3, **caractérisé par** une pluralité de champs d'affichage, un émetteur étant attribué à chaque champ d'affichage.

5. Dispositif d'affichage selon la revendication 4, **caractérisé en ce qu'**un champ d'affichage est un champ d'effacement, dont l'émetteur émet un signal, qui déclenche l'effacement d'une seule information ou de toutes les informations de billet de transport et/ou de supplément stockée(s) dans le terminal d'utilisateur.

6. Dispositif d'affichage selon l'une des revendications 4 ou 5, **caractérisé en ce que** celui-ci comprend au moins un dispositif d'actionnement et les émetteurs sont adaptés de sorte qu'ils émettent des signaux pour une durée prédéterminée, si le dispositif d'actionnement est actionné.

7. Dispositif d'affichage selon l'une des revendications 4 à 6, **caractérisé en ce que** celui-ci comprend au moins un récepteur pour recevoir des signaux d'un terminal d'utilisateur.

8. Dispositif d'affichage selon l'une des revendications 4 à 7, **caractérisé en ce que** l'émetteur est un émetteur RFID ayant une portée de transmission faible.

9. Dispositif d'affichage selon l'une des revendications 4 à 9, **caractérisé en ce que** les champs d'affichage sont disposés sur un cadre de manière modulaire et interchangeable.

10. Dispositif d'affichage selon la revendication 9, **caractérisé en ce que** des champs d'affichage sont retenus sur le cadre par complémentarité de forme et/ou par force.
